# EUROPEAN PATENT APPLICATION

(11) **EP 3 429 127 A1**
(43) Date of publication of application: **16.01.2019**
(21) Application number: 17778581.3
(22) Date of filing: 16.03.2017
(51) Int. Cl.: H04L 12/24

(54) **METHOD OF MONITORING DATA TRANSMISSION AND ASSOCIATED APPARATUS**

(30) Priority: 07.04.2016 CN 201610218734
(71) Applicant: Huawei Technologies Co., Ltd., Longgang District Shenzhen, Guangdong 518129 (CN)
(72) Inventor: XU, Weiping, Shenzhen Guangdong 518129 (CN)
(74) Representative: Gill Jennings & Every LLP
(86) International application number: PCT/CN2017/076957
(87) International publication number: WO 2017/173917

(57) **Abstract**

Embodiments of the present invention provide a monitoring data transmission method and a related device, so as to save transmission resources and increase an integration level. The method in an embodiment of the present invention includes: receiving, by a protocol conversion device, first monitoring data sent by a transponder, where the first monitoring data is monitoring data transmitted by using a first protocol; obtaining, by the protocol conversion device, second monitoring data based on the first monitoring data and a second protocol, where the second monitoring data is data transmitted by using the second protocol, the second monitoring data includes indication information and payload, and the indication information is used to indicate that the payload is monitoring data; and sending, by the protocol conversion device, the second monitoring data to a headend. An embodiment of the present invention further provides the protocol conversion device and the headend device, so as to save the transmission resources and increase the integration level.

## Description

This application claims priority to Chinese Patent Application No. CN201610218734.6, filed with the Chinese Patent Office on April 7, 2016 and entitled "MONITORING DATA TRANSMISSION METHOD AND RELATED DEVICE", which is incorporated herein by reference in its entirety.

### TECHNICAL FIELD

The present invention relates to the communications field, and in particular, to a monitoring data transmission method and a related device.

### BACKGROUND

With rapid development of digital technologies and computer technologies, telecommunications, a computer and a cable TV network begin to penetrate each other. To help manage and save resources, integrated services such as voice, data, an image, and a television are provided to a user by using a single network, and this is a triple-play network. Currently, a hybrid fiber coaxial (English: Hybrid Fiber Coaxial, HFC for short) network is a major representative of the triple-play network. With continuous expansion of the HFC network, a type and a quantity of devices used by the HFC network are also increasing. As the type and the quantity of the devices increase, reliability of the network gradually decreases. To improve the reliability, a device in the HFC network needs to be monitored and obtained monitoring data needs to be managed. Currently, there is a problem of resource waste in transmission of monitoring data in the HFC network, and an integration level is relatively low.

### SUMMARY

Embodiments of the present invention provide a monitoring data transmission method and a related device, so as to help save transmission resources and increase an integration level.

An embodiment of the present invention provides a monitoring data transmission method, where the method is applied to a device status monitoring system, and the system includes a headend device, a protocol conversion device, and a transponder. The headend device is mainly configured to monitor a working status of each monitored device and perform fault management. The headend device may include a network management server, a database server, and several clients. Communication is performed between the network management server, the database server and several clients by using an IP-based network. For example, the IP-based network is a local area network, a metropolitan area network, or the Internet. The network management server is a data scheduling processing center of a network management system. The database server stores all data information of the network management system, and the two servers may also be integrated on a same hardware platform. The monitored device may be an amplifier, or may be a power supply, or another device. The transponder is built in or externally mounted to the monitored device. The transponder collects monitoring data of the monitored device, communicates with the protocol conversion device, and transmits the monitoring data. A first protocol is used to transmit the monitoring data between the protocol conversion device and the headend device, and a second protocol is used to transmit the monitoring data between the protocol conversion device and the transponder. The protocol conversion device is a device that connects two networks and is configured to implement conversion between two standard communications protocols. The protocol conversion device provides an Ethernet interface upwards, provides a radio frequency interface downwards, and can further implement functions such as monitoring data parsing, encapsulation, and forwarding.

According to a first aspect, an embodiment of the present invention provides a monitoring data transmission method, where a protocol conversion device receives first monitoring data sent by a transponder, and the first monitoring data is monitoring data transmitted by using a first protocol. For example, the first protocol may be the HFC network protocol, and the first protocol may be the Data Over Cable Service Interface Specification (English: Data Over Cable Service Interface Specification, DOCSIS for short) protocol, or may be the Hybrid Management Sub-layer Specification and Standards (English: Hybrid Management Sub-layer Specification and Standards, HMS for short) protocol. A second protocol may be an IP-based protocol. The protocol conversion device receives, by using an HFC network, the first monitoring data sent by the transponder, and the protocol conversion device can perform data transmission only after the protocol conversion device converts the first monitoring data into data that can be transmitted in an IP-based network. Therefore, the protocol conversion device converts the monitoring data transmitted by using the first protocol into the monitoring data transmitted by using the second protocol. The protocol conversion device obtains second monitoring data based on the first monitoring data and the second protocol, where the second monitoring data is data transmitted by using the second protocol, the second monitoring data includes indication information and payload, and the indication information is used to indicate that the payload is monitoring data. The protocol conversion device sends the second monitoring data to a headend device.

In this embodiment of the present invention, the protocol conversion device provides an IP-based Ethernet interface upwards, and provides a radio frequency interface downwards. The protocol conversion device adds the indication information to the monitoring data sent to the headend device, to distinguish non-monitoring data transmitted on a same optical fiber. In this way, the headend device may determine, based on the indication information, which is the monitoring data and which is the non-monitoring data. The headend device may identify the monitoring data from received data by using the indication information in the monitoring data, so as to transmit the monitoring data and the non-monitoring data by using the same optical fiber, helping increase an integration level of a transmission medium, and save transmission resources and costs. According to the method provided in this embodiment of the present invention, a conventional manner in which the monitoring data can be carried in only a radio frequency signal to be sent to the headend device is changed, making better use of a D-CMTS digital advantage.

In a possible implementation, the protocol conversion device may be a gateway, and that the protocol conversion device obtains second monitoring data based on the first monitoring data and the second protocol may be specifically: decapsulating, by the protocol conversion device, the first monitoring data to obtain the payload; and encapsulating, by the protocol conversion device, the payload and the indication information based on the second protocol, to obtain the second monitoring data. The second protocol may be the TCP/IP protocol.

In another possible implementation, the protocol conversion device includes the gateway and a converged cable access platform (English: Converged Cable Access Platform, CCAP for short). A function of the protocol conversion device is jointly performed by the gateway and the CCAP in a status monitoring system. After receiving the first monitoring data sent by the transponder, the gateway decapsulates the first monitoring data to obtain the payload. The gateway encapsulates the payload, the indication information, and a second identifier based on a third protocol, to obtain third monitoring data. The second identifier is used to indicate a mapping relationship between an interface and a transponder connected to the interface. The third protocol is a transmission protocol used between the gateway and the CCAP. The gateway sends the obtained monitoring data of the third protocol to the CCAP by using a network. Then, the CCAP extracts the payload of the monitoring data, the CCAP encapsulates the payload, the second identifier, and the indication information based on the second protocol, to obtain the second monitoring data, and the second protocol is used to transmit data between the CCAP and the headend device. Both the second protocol and the third protocol are IP-based protocols, for example, the third protocol may be the User Datagram Protocol (English: User Datagram Protocol, UDP for short) protocol, and the second protocol is the IP protocol.

In this embodiment of the present invention, two data encapsulation manners between the headend device and the protocol conversion device are provided. Corresponding encapsulation adaptation solutions are provided for different protocol conversion devices, increasing flexibility and operability of the technical solutions.

Uplink data transmission may be that the transponder transmits data to the headend device by using the protocol conversion device. Downlink data transmission may be that the headend device transmits data to the transponder by using the protocol conversion device.

In another possible implementation, the protocol conversion device receives second processing data sent by the headend device, and the second processing data is data obtained after the headend device processes the second monitoring data. The second processing data includes a first identifier, the first identifier is an identifier of the transponder, and the second processing data is processing data transmitted by using the second protocol. The protocol conversion device obtains first processing data based on the first protocol and the second processing data, and the first processing data is processing data transmitted by using the first protocol. Because the protocol conversion device includes a plurality of interfaces, and each interface is connected to at least one amplifier. In this way, in a process of the downlink data transmission, the protocol conversion device needs to determine, by using a correspondence between the first identifier and an interface, which interface is used to send the first processing data. The protocol conversion device determines, based on the correspondence and the first identifier, the interface used by the protocol conversion device to communicate with the transponder, and the correspondence includes the first identifier and the interface. The protocol conversion device sends the first processing data to the transponder by using the interface.

In this embodiment of the present invention, the protocol conversion device is added, and the protocol conversion device includes the plurality of the interfaces, so that a plurality of monitored devices can be monitored by one headend device. This achieves an effect of multiplexing the headend device, changes a case in which the headend device can monitor only a fixed quantity of the monitored devices in a conventional monitoring system, saves a headend device resource, and increases an integration level.

In another possible implementation, the protocol conversion device receives the second processing data sent by the headend device, where the second processing data is the data obtained after the second monitoring data is processed, the second processing data includes the second identifier, and the second identifier is used to indicate the mapping relationship between the interface and the transponder connected to the interface. The protocol conversion device obtains the first processing data based on the first protocol and the second processing data. The protocol conversion device determines, based on the second identifier, the interface used by the protocol conversion device to communicate with the transponder. Then, the protocol conversion device sends the first processing data to the transponder by using the determined interface.

In another possible implementation, that the protocol conversion device obtains the first processing data based on the first protocol and the second processing data may be specifically: decapsulating, by the protocol conversion device, the second processing data to obtain processed payload and identification information; and encapsulating, by the protocol conversion device, the payload and the identification information based on the first protocol, to obtain the first processing data, where the identification information includes the first identifier and/or the second identifier.

In a possible implementation, the protocol conversion device extracts an address of the transponder in the processing data, generates MAC layer information of the first protocol based on the extracted address and a type indication of the first protocol, and adds hybrid management sub-layer physical layer (English: Hybrid Management Sub-Layer physical layer, HMS PHY for short) information that is based on the first protocol, to obtain the first processing data.

In another possible implementation, the CCAP receives the second processing data, decapsulates the processing data of the second protocol, and extracts the processed payload. The second processing data is the processing data transmitted by using the second protocol. Then, the CCAP encapsulates the processed payload and the second identifier based on the third protocol, to obtain third processing data, and sends the third processing data to a corresponding gateway. The third processing data is processing data transmitted by using the third protocol. After the CCAP sends the third processing data to the corresponding gateway, the gateway extracts the second identifier and the processed payload, and encapsulates the processed payload again based on the first protocol, to obtain the first processing data. The first processing data is the data transmitted by using the first protocol, and the first protocol is the HFC network protocol.

In another possible implementation, the first protocol is the hybrid fiber coaxial HFC network protocol, and the second protocol is the IP-based protocol.

According to a second aspect, an embodiment of the present invention provides a computer storage medium, configured to store a computer software instruction used by the foregoing protocol conversion device, and the computer storage medium includes a program designed for performing the foregoing aspect.

According to a third aspect, an embodiment of the present invention provides a protocol conversion device that has a function actually performed by the protocol conversion device in the foregoing method. The function may be implemented by using hardware, or may be implemented by executing corresponding software by hardware. The hardware or software includes one or more modules corresponding to the foregoing function.

According to a fourth aspect, a structure of a protocol conversion device includes a memory, a transceiver, and a processor. The memory is configured to store computer-executable program code, and is coupled to the transceiver. The program code includes an instruction, and when the processor executes the instruction, the instruction enables the protocol conversion device to execute information or an instruction provided in the foregoing method.

According to a fifth aspect, an embodiment of the present invention provides a monitoring data transmission method. A headend device receives data sent by a protocol conversion device, where the data is data transmitted by using a preset protocol, and monitoring data includes indication information and payload. A same optical fiber transmits both the monitoring data and non-monitoring data in a data transmission path between the headend device and the protocol conversion device. Therefore, when the headend device receives the data, if the data carries the indication information, where the indication information is used to indicate that the payload is the monitoring data, it indicates that the data is the monitoring data. The headend device determines the monitoring data based on the indication information. The headend device obtains the payload from the monitoring data.

In another possible implementation, after the headend device obtains the payload from the data based on the indication information, the headend device processes the payload to obtain processing data. The headend device sends the processing data to the protocol conversion device.

In another possible implementation, that the headend device processes the payload to obtain processing data may be specifically: after receiving the data, extracting, by the headend device, the payload and a first identifier of the data; processing, by the headend device, the payload to obtain processed payload; and encapsulating, by the headend device, the processed payload and the first identifier based on the preset protocol, to obtain the processing data. The preset protocol may be the IP-based protocol. The first identifier may be an address of a transponder, a sequence number of the transponder, or an index of the transponder. Preferably, the first identifier may be the address of the transponder.

In another possible implementation, after receiving the data, the headend device extracts the payload and a second identifier in the data, and the second identifier is used to indicate a mapping relationship between an interface and a transponder connected to the interface. The headend device processes the payload to obtain the processed payload. The headend device encapsulates the processed payload and the second identifier based on the preset protocol, to obtain the processing data.

According to a sixth aspect, an embodiment of the present invention provides a computer storage medium, configured to store a computer software instruction used by the foregoing headend device. The computer storage medium includes a program designed for performing the foregoing aspects.

According to a seventh aspect, an embodiment of the present invention provides a headend device that has a function actually performed by the headend device in the foregoing methods. The function may be implemented by using hardware, or may be implemented by executing corresponding software by hardware. The hardware or software includes one or more modules corresponding to the foregoing function.

According to an eighth aspect, a structure of a headend device includes a memory, a transceiver, and a processor. The memory is configured to store computer-executable program code, and is coupled to the transceiver. The program code includes an instruction, and when the processor executes the instruction, the instruction enables the headend device to execute information or an instruction provided in the foregoing method.

According to a ninth aspect, an embodiment of the present invention provides a device status monitoring system, where the system includes a headend device, a protocol conversion device, and a transponder. The protocol conversion device is the protocol conversion device provided in the third aspect and the fourth aspect, and the headend device is the device provided in the seventh aspect and the eighth aspect.

### BRIEF DESCRIPTION OF DRAWINGS

FIG. 1 is a schematic structural diagram of a device monitoring system in the prior art;
FIG. 2 is a schematic structural diagram of a device monitoring system according to an embodiment of the present invention;
FIG. 3 is a schematic structural diagram of a subsystem according to an embodiment of the present invention;
FIG. 4 is a schematic structural diagram of a device monitoring system according to an embodiment of the present invention;
FIG. 5 is a schematic diagram of a monitoring data transmission method according to an embodiment of the present invention;
FIG. 6 is a schematic diagram of an embodiment of forwarding monitoring data by a gateway according to an embodiment of the present invention;
FIG. 7 is a schematic diagram of another embodiment of forwarding monitoring data by a gateway according to an embodiment of the present invention;
FIG. 8 is a schematic structural diagram of an embodiment of a protocol conversion device according to an embodiment of the present invention;
FIG. 9 is a schematic structural diagram of another embodiment of a protocol conversion device according to an embodiment of the present invention;
FIG. 10 is a schematic structural diagram of an embodiment of a headend device according to an embodiment of the present invention; and
FIG. 11 is a schematic structural diagram of another embodiment of a headend device according to an embodiment of the present invention.

### DESCRIPTION OF EMBODIMENTS

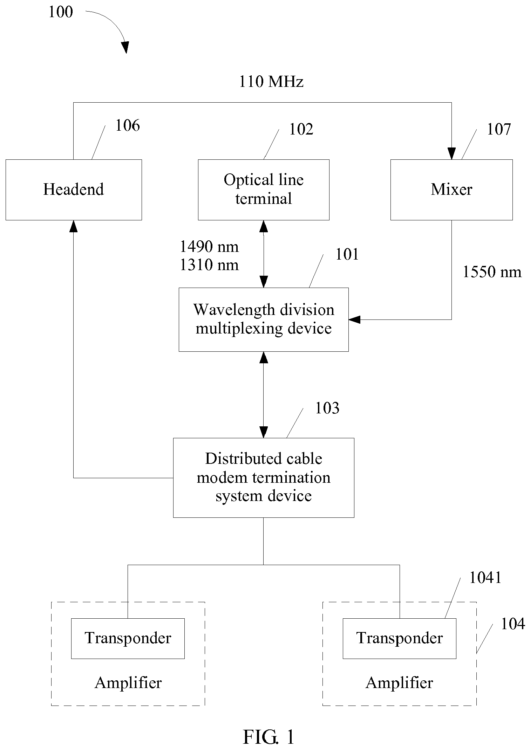

As a type and a quantity of devices increase, reliability of a network gradually decreases. To improve the reliability, a device in an HFC network needs to be monitored and obtained monitoring data needs to be managed. The monitored device may be an amplifier, a power supply device, or the like. An example in which the following monitored device is the amplifier may be used for description. Due to line attenuation, the amplifier needs to be disposed on a line, and the amplifier is often faulty. According to incomplete statistics, an average quantity of signal interruption faults of a medium-sized HFC network may be tens of times in a year, and a signal interruption time caused by this may take up to tens of hours. This undoubtedly causes an enormous loss. In a common method, a device status monitoring system structure is as follows: Referring to a device status monitoring system 100 shown in FIG. 1, for example, the system 100 includes: a distributed cable modem termination system (English: distributed cable modem termination system, D-CMTS for short) device 103, an optical line terminal (English: optical line terminal, OLT for short) 102, a wavelength division multiplexing (English: Wavelength Division Multiplexing, WDM for short) device 101, an amplifier (Amplifier, AMP for short) 104, a mixer (Mixer) 107, and a hybrid management sub-layer headend (English: Hybrid Management Sub-Layer Headend, HMS Headend for short) 106. The hybrid management sub-layer headend is referred to as a headend device or a headend below. The OLT 102, the WDM 101, and the D-CMTS device 103 are connected in sequence by using an optical fiber. The WDM 101 multiplexes optical signals of different wavelengths into one optical fiber for transmission, and network data is transmitted between the OLT 102 and the D-CMTS device 103, for example, Ethernet data. The headend device 106 and the D-CMTS device 103 are connected by using a cable, and monitoring data is transmitted between the headend device 106 and the D-CMTS device 103.

Due to the line attenuation, the amplifier 104 needs to be added between a terminal and the D-CMTS device 103. To reduce a probability of an amplifier fault, or to learn fault information of the amplifier in a timely manner, a transponder 1041 is disposed in the amplifier. The transponder is configured to: detect whether the amplifier is faulty, and obtain or collect status information of the amplifier. The headend device is configured to monitor a working status of each amplifier. The monitoring data needs to be transmitted between the headend device and the amplifier 104. The following uses an example to describe a process of transmitting the monitoring data.

Transmission is performed in different manners in an uplink direction and a downlink direction. For example, in the uplink direction, after detecting a fault, the transponder reports the monitoring data to the headend device 106. The monitoring data is carried in a 64 MHz radio frequency signal sent by the transponder, and is transmitted to the D-CMTS device 103 by using a coaxial cable. The D-CMTS device 103 sends the monitoring data to the headend device 106. In the downlink direction, the headend device 106 sends, to the mixer (Mixer) 107, the monitoring data carried in a 110 MHz radio frequency signal, and is transmitted to the WDM 101 on an optical fiber through a 1550 nm wavelength. The WDM 101 combines a wavelength signal from the OLT 102 with a wavelength signal from the mixer, and sends the combined signal to the D-CMTS device 103 by using one optical fiber.

It can be learned from the foregoing example that another transmission cable is needed to transmit the monitoring data between the headend device and the D-CMTS device, resulting in a low integration level and wasting a cable resource.

Embodiments of the present invention provide a monitoring data transmission method and a related device, so as to make full use of a D-CMTS digital advantage. One optical fiber is used between the headend device and a protocol conversion device to transmit both the network data and the monitoring data, helping increase an integration level of a transmission medium and save transmission resources and costs.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way is interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

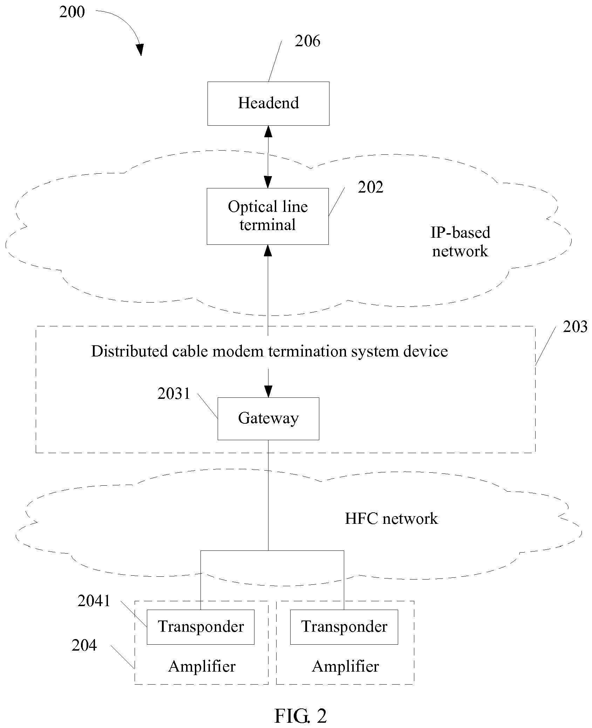

An embodiment of the present invention provides a monitoring data transmission method, and the method is applied to a device status monitoring system 200 in an HFC network. The following first briefly describes a structure of the monitoring system. Referring to a schematic diagram of the device status monitoring system 200 shown in FIG. 2, the system 200 includes a hybrid management sub-layer headend (English: Hybrid Management Sub-Layer Headend, HMS Headend for short) device 206, a D-CMTS device 203, and an optical line terminal (OLT) 202. The D-CMTS device 203 includes a protocol conversion device. In an embodiment of the present invention, the protocol conversion device may be a hybrid management sub-layer gateway (English: Hybrid Management Sub-Layer Gateway, HMS Gateway for short). The hybrid management sub-layer gateway is referred to as a gateway below.

The headend device 206 is connected to the OLT 202, the OLT 202 is connected to the D-CMTS device 203, and the D-CMTS device 203 includes a gateway 2031. Each gateway 2031 manages at least one amplifier 204. The gateway 2031 may be integrated into the D-CMTS device 203, or may be independently disposed. In this embodiment of the present invention, an example in which the HMS gateway 2031 is integrated into the D-CMTS device 203 is used for description. The gateway 2031 is connected to the amplifier 204 by using a cable. The gateway 2031 may include a plurality of interfaces, and each interface may be connected to the at least one amplifier 204.

In this embodiment of the present invention, the headend device 206 is mainly configured to monitor a working status of each monitored device and perform fault management, for example, identify a type and a nature of a fault, record all information about the fault, and provide data for analyzing a fault cause. The headend device 206 may include a network management server, a database server, and several clients. Data is transmitted between the network management server, the database server and several clients by using an IP-based network, such as a local area network, a metropolitan area network or the Internet. The network management server is a data scheduling processing center of a network management system, the database server stores all data information of the network management system, and the two servers may also be integrated on a same hardware platform. The monitored device may be an amplifier, or may be a power supply, or another device. In this embodiment of the present invention, an example in which the monitored device is the amplifier is used for description.

In this embodiment of the present invention, IP network data is transmitted between the OLT 202 and the D-CMTS device 203. As shown in FIG. 2, a transmission path of the network data is "the OLT 202 -- the D-CMTS device 203", and monitoring data that needs to be transmitted between the headend device 206 and the D-CMTS device 203 is also carried in the foregoing transmission path. To be specific, a transmission path of the monitoring data is "the headend device 206 -- the OLT 202 -- the D-CMTS device 203".

First, the IP network data is transmitted between the OLT 202 and the D-CMTS device 203. In this embodiment of the present invention, an example in which the network data is Ethernet data is used for description. Then, the monitoring data needs to be carried in an Ethernet signal between the headend device 206 and the D-CMTS device 203, and the headend device 206 receives or sends the monitoring data by using an Ethernet interface. Because the foregoing transmission path transmits both the monitoring data and non-monitoring data, the headend device 206 needs to identify the received data and determines which is the monitoring data and which is the non-monitoring data. When uplink data is transmitted, the headend device 206 receives the data, identifies the monitoring data by using indication information carried in the data, and may process the monitoring data.

Second, the device status monitoring system 200 transmits the monitoring data by using two networks: the IP-based network and the HFC network. The D-CMTS device 203 is a central office device and is deployed on an optical node of the HFC network. The Ethernet signal is transmitted between the headend device 206 and the D-CMTS device 203, and this belongs to the IP-based network. The monitoring data transmitted between the D-CMTS device 203 and the amplifier 204 needs to be carried in a radio frequency signal for transmission, and this belongs to the HFC network and supports the Data Over Cable Service Interface Specification (English: Data Over Cable Service Interface Specification, DOCSIS for short). Therefore, a protocol supported by "the monitoring data between the headend device 206 and the D-CMTS device 203" is different from a protocol supported by "the monitoring data between the D-CMTS device 203 and the amplifier".

In this embodiment of the present invention, the monitoring data between the gateway 2031 and the headend device 206 is transmitted by using the IP-based network, and the monitoring data between the gateway 2031 and a transponder 2041 is transmitted by using the HFC network. The gateway 2031 is a gateway that connects the IP-based network and the HFC network, and serves as a conversion function between two standard communications protocols. The gateway 2031 provides an IP-based Ethernet interface upwards, provides a radio frequency interface downwards, and implements functions such as monitoring data parsing, encapsulation, and forwarding. The transponder 2041 is built in or externally mounted to a monitored device end (such as the amplifier). The transponder collects the monitoring data of the monitored device, communicates with the gateway 2031, and transmits the monitoring data.

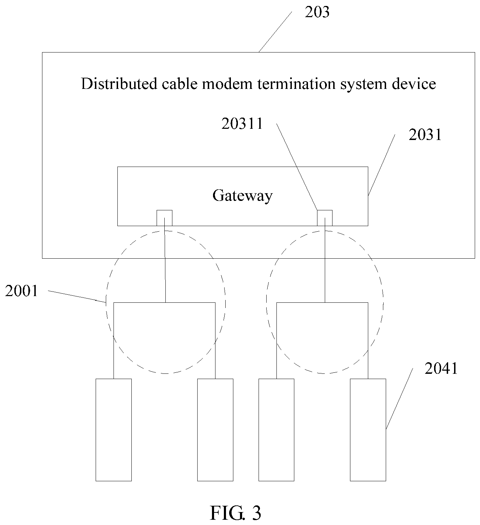

Then, understanding is obtained with reference to FIG. 3. A headend device 206 may manage a plurality of D-CMTS devices 203, each D-CMTS device 203 includes a gateway 2031, each gateway 2031 includes a plurality of interfaces 20311, and a coaxial cable connected to each interface 20311 is connected to at least one transponder 2041. In other words, one interface 20311 of the gateway 2031 may receive monitoring data sent by a plurality of transponders. In this way, the headend device 206 may manage a plurality of gateways 2031, monitor working statuses of a plurality of amplifiers 204, and process monitoring data sent by the plurality of the amplifiers 204. Each interface of the gateway 2031 and the transponder 2041 connected to the interface form a subsystem 2001. The subsystem 2001 has a corresponding relationship table with the transponder 2041 and the interface 20311 that are included in the subsystem 2001, or the relationship table further has an identifier that has a mapping relationship with the relationship table. It should be noted that a first identifier in the present invention is an identifier of the transponder, the identifier of the transponder includes an address of the transponder, an index of the transponder, or a sequence number of the transponder, and an example in which the identifier of the transponder in this embodiment of the present invention may be the address of the transponder is used for description. A second identifier in the present invention is a subsystem identifier. The relationship table may be established through learning or statically configured by the gateway, and maintained by the gateway 2031. When the gateway 2031 forwards monitoring data in a downlink direction, the relationship table is used to determine, based on the address of the transponder, an interface to which the transponder belongs. The gateway 2031 forwards the monitoring data by using the interface, so that the monitoring data can properly reach a corresponding transponder. In this embodiment of the present invention, the headend device 206 may simultaneously manage a plurality of monitored devices (amplifiers) in the D-CMTS device, to be specific, the plurality of the monitored devices may be monitored by one headend device. This achieves an effect of multiplexing the headend device, changes a case in which the headend device can monitor only a fixed quantity of the monitored devices in a conventional monitoring system, saves a headend device resource, and increases an integration level.

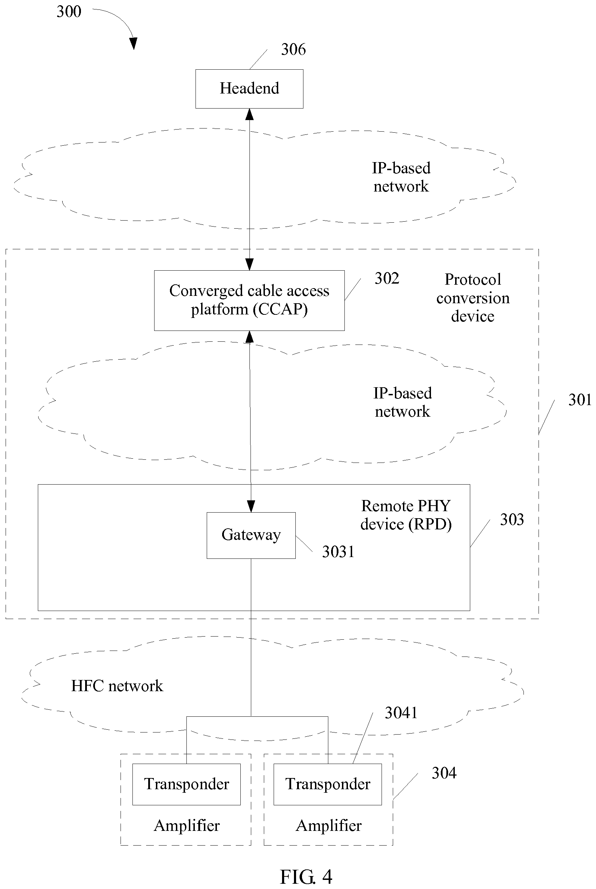

It should be noted that in an actual application, a monitoring data transmission method may be further applied to another device status monitoring system 300. The device status monitoring system 300 is shown in FIG. 4, and the device status monitoring system 300 includes a headend device 306, a protocol conversion device 301, a remote PHY device (English: Remote PHY Device, RPD for short) 303, and an amplifier 304. The protocol conversion device includes a converged cable access platform (English: Converged Cable Access Platform, CCAP for short) 302 and a gateway 3031. The gateway 3031 is built in the remote PHY device (English: Remote PHY Device, RPD for short) 303, and a transponder 3041 is built in the amplifier 304. The headend device 306 is connected to the CCAP 302 by using an IP network, and the CCAP 302 is connected to the RPD 303 by using the IP network.

A difference between the device status monitoring system 300 and a device status monitoring system 200 lies in that in the device status monitoring system 300, the protocol conversion device 301 includes the converged cable access platform (English: Converged Cable Access Platform, CCAP for short) 302 and the gateway 3031, and a function of the protocol conversion device is jointly performed by the gateway 3031 and the CCAP 302 in the status monitoring system 300.

For ease of understanding, the following describes in detail a monitoring data transmission method provided in the present invention.

For the monitoring data transmission method, the method is applied to a device status monitoring system. For a structure of the device status monitoring system, refer to FIG. 2 and FIG. 4 for understanding. The system includes a headend device, a protocol conversion device, and a transponder.

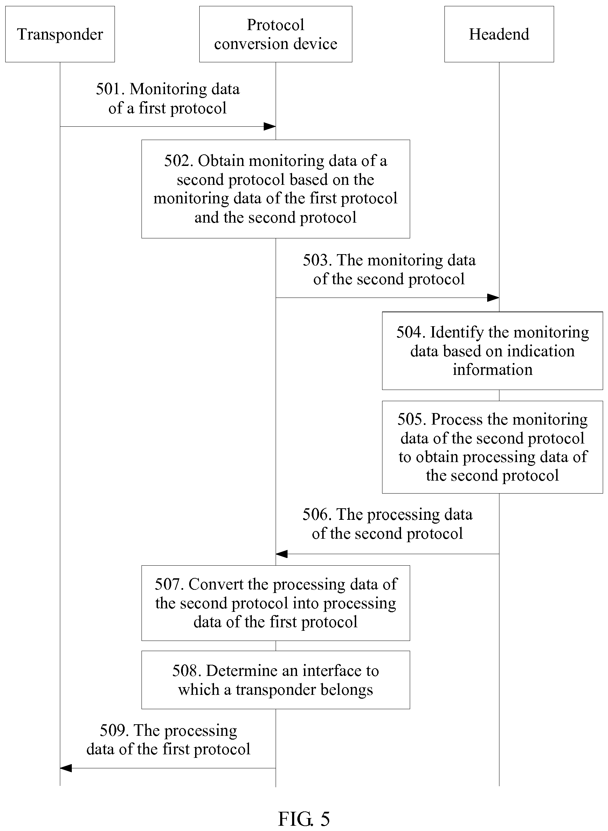

Referring to FIG. 5, an embodiment of the monitoring data transmission method includes the following content.

Step 501. A transponder sends monitoring data of a first protocol to a protocol conversion device.

When the transponder collects fault information of an amplifier, the transponder adds the monitoring data of the first protocol to a radio frequency signal and sends the radio frequency signal to the protocol conversion device by using an HFC network. The first protocol is an HFC network protocol. It should be noted that, both first monitoring data and the monitoring data of the first protocol in the present invention are data transmitted by using the first protocol, and the first protocol is the HFC network protocol. For example, the first protocol may be the DOCSIS protocol, or may be the Hybrid Management Sub-layer Specification and Standards (English: Hybrid Management Sub-layer Specification and Standards, HMS for short) protocol.

Step 502. The protocol conversion device receives the monitoring data that is of the first protocol and that is sent by the transponder, and obtains monitoring data of a second protocol based on the second protocol and the monitoring data of the first protocol.

The protocol conversion device receives, by using the HFC network, the monitoring data that is of the first protocol and that is sent by the transponder. The protocol conversion device can perform data transmission only after the protocol conversion device converts the monitoring data into data that can be transmitted in an IP-based network. Therefore, the monitoring data of the first protocol needs to be converted into the monitoring data of the second protocol.

It should be noted that, both second monitoring data and the monitoring data of the second protocol in the present invention are data transmitted by using the second protocol, and the second protocol is an IP-based protocol.

Specifically, for a specific manner of converting the monitoring data of the first protocol into the monitoring data of the second protocol, two examples are used for description. In the following two examples, data encapsulation manners between the headend device and the protocol conversion device are different.

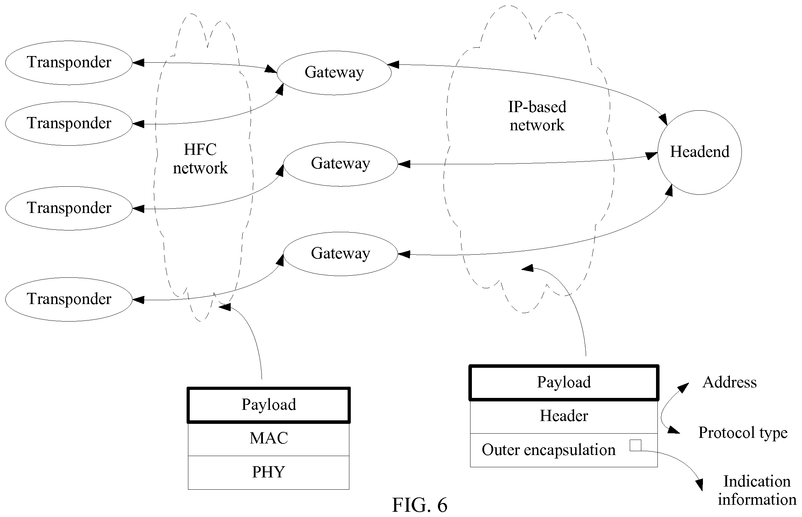

First, in a first example, the protocol conversion device may be a gateway, and understanding is obtained with reference to FIG. 2 and FIG. 6. After receiving the monitoring data that is of the first protocol and that is sent by the transponder, the protocol conversion device decapsulates the monitoring data of the first protocol, decapsulates hybrid management sub-layer physical layer (English: Hybrid Management Sub-Layer physical layer, HMS PHY for short) information and hybrid management sub-layer physical layer media access control (English: Hybrid Management Sub-Layer physical layer Media Access Control, HMS MAC for short) layer information, and extracts payload payload.

The protocol conversion device adds a header to the extracted payload, and the header includes a first identifier and a type indication of the second protocol (such as the TCP/IP protocol). It should be noted that the first identifier is an identifier of the transponder, and the identifier of the transponder may be a sequence number of the transponder, or an index of the transponder. Preferably, the identifier of the transponder may be an address of the transponder.

The protocol conversion device continues to add outer encapsulation to the payload after the header is added and the type indication of the second protocol, and encapsulates indication information. After the outer encapsulation is completed, the monitoring data of the second protocol is obtained. The type indication is used to indicate that a type of the protocol is the second protocol, and the indication information is used to indicate that a type of the data is the monitoring data. The type indication of the second protocol may be information carried in a protocol type field in the monitoring data of the second protocol.

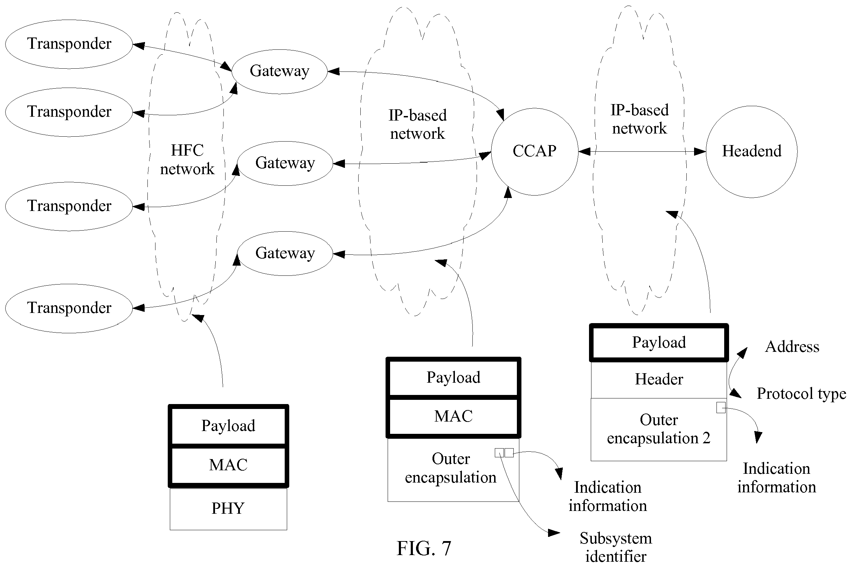

Optionally, this embodiment of the present invention further provides another encapsulation manner. In a second example, understanding is obtained with reference to FIG. 4 and FIG. 7, the protocol conversion device includes a gateway and a CCAP.

After receiving the monitoring data that is of the first protocol and that is sent by the transponder, the gateway decapsulates the monitoring data of the first protocol, decapsulates the HMS PHY layer information, and extracts the HMS MAC layer information and the payload (payload).

The gateway adds outer encapsulation to the extracted HMS MAC layer information and the payload, encapsulates indication information and a subsystem identifier (Region ID), adds a corresponding field to a sub-protocol (such as the VXLAN/PW/L2TP) included in the HMS, to indicate a third protocol type, and obtains monitoring data of a third protocol. It should be noted that, the monitoring data of the third protocol in the present invention has a same meaning as third monitoring data, and both are data transmitted by using the third protocol.

The gateway uses the third protocol to send the obtained monitoring data of the third protocol to the CCAP. The CCAP removes the HMS MAC layer information, extracts the payload payload of the monitoring data, and adds a header to the extracted payload. The header includes the address of the transponder and the type indication of the second protocol. The gateway adds outer encapsulation to the payload of the monitoring data, encapsulates the indication information, and obtains the monitoring data of the second protocol. It should be noted that both the second protocol and the third protocol are IP-based protocols. For example, the second protocol is the IP protocol, and the third protocol may be the UDP protocol, the Internet Control Message Protocol (English: Internet Control Message Protocol, ICMP for short), or the like.

In this embodiment of the present invention, two data encapsulation manners between the headend device and the protocol conversion device are provided. Corresponding encapsulation adaptation solutions are provided for different protocol conversion devices, increasing flexibility and operability of the technical solutions.

Step 503. The protocol conversion device sends the monitoring data of the second protocol to a headend device.

The protocol conversion device sends the monitoring data of the second protocol to the headend device by using the IP-based network, and the monitoring data is carried in an Ethernet signal for sending.

Step 504. The headend device receives the monitoring data of the second protocol, and identifies the monitoring data based on indication information of the monitoring data of the second protocol.

One optical fiber transmits both the monitoring data and non-monitoring data in a data transmission path between the headend device and the protocol conversion device. Therefore, when the headend device receives data, if the data carries the indication information, it indicates that the data is the monitoring data. The headend device determines the monitoring data based on the indication information carried in the data.

Step 505. The headend device processes the monitoring data of the second protocol to obtain processing data of the second protocol.

Understanding is obtained with reference to FIG. 6. The headend device receives the monitoring data of the second protocol, extracts the payload (payload) of the monitoring data and the identifier of the transponder, processes the payload, and adds the outer encapsulation to the processed payload and the identifier of the transponder, to obtain the processing data of the second protocol. The identifier of the transponder in this step may be the address of the transponder, the sequence number of the transponder, or the index of the transponder. Preferably, the identifier of the transponder may be the address of the transponder.

Optionally, in the second example, understanding is obtained with reference to FIG. 7. The headend device receives the monitoring data of the second protocol, extracts the payload (payload) of the monitoring data of the second protocol and the subsystem identifier, processes the payload, and adds the outer encapsulation to the processed payload and the identifier of the transponder, to obtain the processing data of the second protocol.

Step 506. The headend device sends the processing data of the second protocol to the protocol conversion device.

In the first example, understanding is obtained with reference to FIG. 6. The protocol conversion device is the gateway. Because the headend device may manage a plurality of gateways, the headend device searches a correspondence table between the transponder and the gateway based on address information of the transponder in the received processing data of the second protocol, to obtain a location of a corresponding protocol conversion device. It should be noted that the correspondence table between the transponder and the gateway may be preconfigured in the headend device.

Optionally, in the second example, understanding is obtained with reference to FIG. 7. The headend device sends the processing data of the second protocol to the CCAP.

Step 507. The protocol conversion device receives the processing data that is of the second protocol and that is sent by the headend device, and obtains processing data of the first protocol based on the processing data of the second protocol and the first protocol.

The protocol conversion device receives the processing data of the second protocol by using the IP-based network, needs to convert the processing data of the second protocol into data that can be transmitted in the HFC network, and then sends the data to the transponder. The second protocol is the IP-based protocol, and the first protocol is a related protocol in the HFC network.

Specifically, for the first example, the protocol conversion device extracts the address of the transponder in the processing data, generates MAC layer information of the first protocol based on the extracted address and a type indication of the first protocol, and adds HMS PHY layer information of the first protocol, to obtain the processing data of the first protocol. The type indication of the first protocol may be information carried in a protocol type field.

For the second example, the CCAP receives the processing data of the second protocol, decapsulates the processing data of the second protocol, extracts the processed payload, and generates the HMS MAC layer information. The CCAP adds outer encapsulation to the processed payload, the HMS MAC layer information, and the subsystem identifier (Region ID), obtains processing data of the third protocol, and sends the processing data of the third protocol to a corresponding gateway. It should be noted that when processing uplink monitoring data, the CCAP learns a correspondence between the transponder and the gateway. When sending the processing data to the gateway in a downlink direction, the CCAP searches for the correspondence by using a gateway address, finds the gateway address, and sends the processing data of the third protocol to the corresponding gateway. It should be noted that both the second protocol and the third protocol are the IP-based protocols.

After the CCAP sends the monitoring data of the third protocol to the corresponding gateway, the gateway extracts the processed payload and the subsystem identifier, encapsulates the processed payload again, and encapsulates the MAC layer information and the PHY layer information of the first protocol, to obtain the processing data of the first protocol. The first protocol is the HFC network protocol.

Step 508. The protocol conversion device determines an interface of the protocol conversion device to which the transponder belongs.

Because the protocol conversion device includes a plurality of interfaces, and each interface is connected to at least one amplifier. In this way, in a process of downlink data transmission, the protocol conversion device needs to determine, by using the first identifier and the correspondence, which interface is used to send the processing data of the first protocol.

In the first example, the protocol conversion device searches a relationship table between the transponder and a subsystem, and determines an interface to which the transponder belongs, or in the second example, the HMS gateway determines, based on the subsystem identifier, an interface to which the transponder belongs.

Step 509. The protocol conversion device sends the processing data of the first protocol to the transponder by using the interface.

The protocol conversion device carries the processing data of the first protocol in the radio frequency signal by using the interface for output and sends the processing data of the first protocol to the transponder by using the interface.

In this embodiment of the present invention, the monitoring data between the protocol conversion device and the headend device is transmitted by using the IP-based network, and the monitoring data between the protocol conversion device and the transponder is transmitted by using the HFC network. The protocol conversion device serves as a conversion function between two standard communications protocols, and the gateway provides an IP-based Ethernet interface upwards. The protocol conversion device may add the monitoring data to the Ethernet signal for transmission and add the indication information to the monitoring data, so as to distinguish a network signal on a same optical fiber. This changes a case in which the monitoring data is conventionally carried in only the radio frequency signal to be sent to the headend device, and makes better use of a D-CMTS digital advantage. One optical fiber is used between the headend device and the protocol conversion device to transmit both the monitoring data and the non-monitoring data, so as to increase an integration level and save a transmission medium and costs.

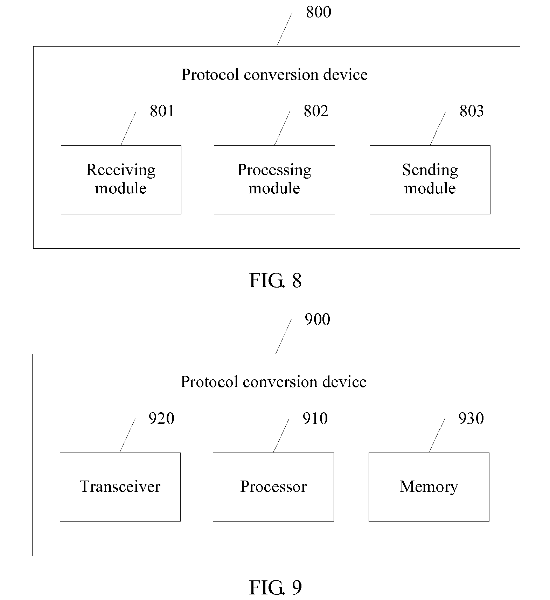

The foregoing describes a monitoring data transmission method, and the following specifically describes a related device applied to the monitoring data transmission method. Referring to FIG. 8, a protocol conversion device in an embodiment of the present invention is applied to the device monitoring system shown in FIG. 2, and an embodiment of the protocol conversion device includes:
a receiving module 801, configured to receive first monitoring data sent by a transponder, where the first monitoring data is monitoring data transmitted by using a first protocol;
a processing module 802, configured to obtain second monitoring data based on a second protocol and the first monitoring data received by the receiving module 801, where the second monitoring data is monitoring data transmitted by using the second protocol, the second monitoring data includes indication information and payload, and the indication information is used to indicate that the payload is the monitoring data; and
a sending module 803, configured to send, to the headend device, the second monitoring data obtained by the processing module 802 through processing.

Further, the processing module 802 is further configured to perform "a step of obtaining the monitoring data of the second protocol based on the monitoring data of the first protocol and the second protocol" in step 502 of the method embodiment corresponding to FIG. 5, and further configured to: perform a step of identifying the monitoring data based on the indication information of the monitoring data of the second protocol in step 504, perform a step of obtaining processing data of the first protocol based on processing data of the second protocol and the first protocol in step 507, and perform step 508.

The receiving module 801 is configured to perform a step of receiving the monitoring data that is of the first protocol and that is sent by the transponder in step 502, a step of receiving the processing data that is of the second protocol and that is sent by the headend device in step 507, and a step of receiving the monitoring data of the second protocol in step 504. The sending module 803 is configured to perform step 503 and step 509.

Further, the protocol conversion device in FIG. 8 is presented in a form of a functional module. The "module" herein may be an application-specific integrated circuit (application-specific integrated circuit, ASIC), a circuit, a processor and a memory that execute one or more software programs or firmware programs, an integrated logic circuit, and/or another component that can provide the foregoing function. In a simple embodiment, modules included in the protocol conversion device in FIG. 8 may be implemented by a processor 910, a transceiver 920, and a memory 930 in FIG. 9. The memory 930 is configured to store executable program code, and the code includes an instruction. The processor 910 enables, based on the instruction, the protocol conversion device to perform the method that is performed by the protocol conversion device in the embodiment corresponding to FIG. 5.

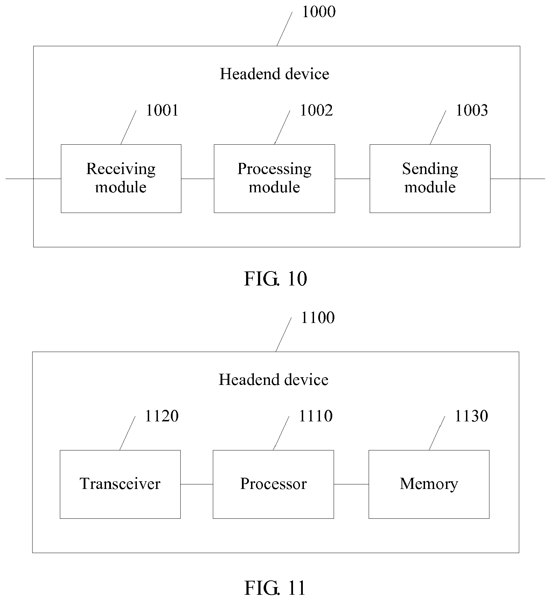

As shown in FIG. 10, an embodiment of the present invention further provides a headend device. The headend device is applied to a device monitoring system. The headend device includes:
a receiving module 1001, configured to receive data sent by a protocol conversion device, where the data is data transmitted by using a preset protocol, the data includes indication information and payload, and the indication information is used to indicate that the payload is monitoring data; and
a processing module 1002, configured to obtain the payload from the data based on the indication information received by the receiving module 1001.

Further, the receiving module 1001 is configured to perform a step of receiving monitoring data of a second protocol in step 504 of the embodiment corresponding to FIG. 5. The processing module 1002 is configured to perform a step of identifying the monitoring data based on the indication information of the monitoring data of the second protocol in step 504, and is configured to perform step 505.

Further, the headend device further includes a sending module 1003, configured to perform step 506.

Further, the headend device in FIG. 10 is presented in a form of a functional module. The "module" herein may be an application-specific integrated circuit (application-specific integrated circuit, ASIC), a circuit, a processor and a memory that execute one or more software programs or firmware programs, an integrated logic circuit, and/or another component that can provide the foregoing function. In a simple embodiment, modules included in the headend device in FIG. 10 may be implemented by a transceiver 1110, a processor 1120, and a memory 1130 in FIG. 11. The memory 1130 is configured to store executable program code, and the code includes an instruction. The processor 1120 enables, based on the instruction, the headend device to perform the method that is performed by the headend device in the embodiment corresponding to FIG. 5.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A monitoring data transmission method, wherein the method comprises:
receiving, by the protocol conversion device, first monitoring data sent by a transponder, wherein the first monitoring data is monitoring data transmitted by using a first protocol;
obtaining, by the protocol conversion device, second monitoring data based on the first monitoring data and a second protocol, wherein the second monitoring data is data transmitted by using the second protocol, the second monitoring data comprises indication information and payload, and the indication information is used to indicate that the payload is monitoring data; and
sending, by the protocol conversion device, the second monitoring data to the headend device.

2. The method according to claim 1, wherein the obtaining, by the protocol conversion device, second monitoring data based on the first monitoring data and a second protocol comprises:
decapsulating, by the protocol conversion device, the first monitoring data to obtain the payload; and
encapsulating, by the protocol conversion device, the payload based on the second protocol and the indication information, to obtain the second monitoring data.

3. The method according to claim 1 or 2, wherein the method further comprises:
receiving, by the protocol conversion device, second processing data sent by the headend device, wherein the second processing data is data obtained after the second monitoring data is processed, the second processing data comprises a first identifier, the first identifier is an identifier of the transponder, and the second processing data is processing data transmitted by using the second protocol;
obtaining, by the protocol conversion device, first processing data based on the first protocol and the second processing data, wherein the first processing data is processing data transmitted by using the first protocol;
determining, by the protocol conversion device based on a correspondence and the first identifier, an interface used by the protocol conversion device to communicate with the transponder, wherein the correspondence comprises the first identifier and the interface; and
sending, by the protocol conversion device, the first processing data to the transponder by using the interface.

4. The method according to claim 1 or 2, wherein the method further comprises:
receiving, by the protocol conversion device, second processing data sent by the headend device, wherein the second processing data is data obtained after the second monitoring data is processed, the second processing data comprises a second identifier, and the second identifier is used to indicate a mapping relationship between an interface and a transponder connected to the interface;
obtaining, by the protocol conversion device, first processing data based on the first protocol and the second processing data, wherein the first processing data is processing data transmitted by using the first protocol;
determining, by the protocol conversion device based on the second identifier, an interface used by the protocol conversion device to communicate with the transponder; and
sending, by the protocol conversion device, the first processing data to the transponder by using the interface.

5. The method according to claim 3 or 4, wherein the obtaining, by the protocol conversion device, first processing data based on the first protocol and the second processing data comprises:
decapsulating, by the protocol conversion device, the second processing data to obtain processed payload; and
encapsulating, by the protocol conversion device, the payload based on the first protocol, to obtain the first processing data.

6. The method according to any one of claims 1 to 4, wherein the method further comprises:
the first protocol is a hybrid fiber coaxial HFC network protocol, and the second protocol is an IP-based protocol.

7. A monitoring data transmission method, wherein the method comprises:
receiving, by a headend device, data sent by a protocol conversion device, wherein the data is data transmitted by using a preset protocol, the data comprises indication information and payload, and the indication information is used to indicate that the payload is monitoring data; and
obtaining, by the headend device, the payload from the data based on the indication information.

8. The method according to claim 7, wherein after the obtaining, by the headend device, the payload from the data based on the indication information, the method further comprises:
processing, by the headend device, the payload to obtain processing data; and
sending, by the headend device, the processing data to the protocol conversion device, wherein the processing data is data transmitted by using the preset protocol.

9. The method according to claim 8, wherein the monitoring data further comprises a first identifier, the first identifier is an identifier of a transponder, and the processing, by the headend device, the payload to obtain processing data comprises:
processing, by the headend device, the payload to obtain processed payload; and
encapsulating, by the headend device, the processed payload and the first identifier based on the preset protocol, to obtain the processing data.

10. The method according to claim 8, wherein the monitoring data further comprises a second identifier, the second identifier is used to indicate a mapping relationship between an interface and a transponder connected to the interface, and the processing, by the headend device, the payload to obtain processing data comprises:
processing, by the headend device, the payload to obtain processed payload; and
encapsulating, by the headend device based on the preset protocol, the processed payload and the second identifier, to obtain the processing data.

11. A protocol conversion device, comprising:
a receiving module, configured to receive first monitoring data sent by a transponder, wherein the first monitoring data is monitoring data transmitted by using a first protocol;
a processing module, configured to obtain second monitoring data based on a second protocol and the first monitoring data received by the receiving module, wherein the second monitoring data is data transmitted by using the second protocol, the second monitoring data comprises indication information and payload, and the indication information is used to indicate that the payload is monitoring data; and
a sending module, configured to send, to the headend device, the second monitoring data obtained by the processing module through processing.

12. The protocol conversion device according to claim 11, wherein the processing module is specifically configured to:
decapsulate the first monitoring data to obtain the payload; and
encapsulate the payload based on the second protocol and the indication information, to obtain the second monitoring data.

13. The protocol conversion device according to claim 11 or 12, wherein the receiving module is further configured to receive second processing data sent by the headend device, the second processing data is data obtained after the second monitoring data is processed, the second processing data comprises a first identifier, the first identifier is an identifier of the transponder, and the second processing data is processing data transmitted by using the second protocol;
the processing module is further configured to obtain first processing data based on the first protocol and the second processing data received by the receiving module, wherein the first processing data is processing data transmitted by using the first protocol;
the processing module is further configured to determine, based on a correspondence and the first identifier, an interface used by the protocol conversion device to communicate with the transponder, wherein the correspondence comprises the first identifier and the interface; and
the sending module is further configured to send the first processing data to the transponder by using the interface determined by the determining module.

14. The protocol conversion device according to claim 11 or 12, wherein the receiving module is further configured to receive second processing data sent by the headend device, the second processing data is data obtained after the second monitoring data is processed, the second processing data comprises a second identifier, and the second identifier is used to indicate a mapping relationship between an interface and a transponder connected to the interface;
the processing module is further configured to obtain first processing data based on the first protocol and the second processing data received by the receiving module, wherein the first processing data is processing data transmitted by using the first protocol;
the processing module is further configured to determine, based on the second identifier in the second processing data received by the receiving module, an interface used by the protocol conversion device to communicate with the transponder; and
the sending module is further configured to send the first processing data to the transponder by using the interface determined by the determining module.

15. The protocol conversion device according to claim 13 or 14, wherein the processing module is specifically configured to:
decapsulate the second processing data received by the receiving module, to obtain processed payload; and
encapsulate the payload based on the first protocol, to obtain the first processing data.

16. A headend device, comprising:
a receiving module, configured to receive data sent by a protocol conversion device, wherein the data is data transmitted by using a preset protocol, the data comprises indication information and payload, and the indication information is used to indicate that the payload is monitoring data; and
a processing module, configured to obtain the payload from the data based on the indication information.

17. The headend device according to claim 16, wherein the headend device further comprises a sending module;
the processing module is further configured to process the payload to obtain processing data; and
the sending module is configured to send the processing data to the protocol conversion device, wherein the processing data is data transmitted by using the preset protocol.

18. The headend device according to claim 17, wherein the monitoring data further comprises a first identifier, the first identifier is an identifier of a transponder, and the processing module is specifically configured to:
process the payload to obtain processed payload; and
encapsulate the processed payload and the first identifier based on the preset protocol, to obtain the processing data.

19. The headend device according to claim 17, wherein the monitoring data further comprises a second identifier, the second identifier is used to indicate a mapping relationship between an interface and a transponder connected to the interface, and the processing module is specifically configured to:
process the payload to obtain processed payload; and
encapsulate the processed payload and the second identifier based on the preset protocol, to obtain the processing data.
